# EUROPÄISCHE PATENTANMELDUNG

(11) **EP 1 343 079 A1**
(43) Veröffentlichungstag der Anmeldung: **10.09.2003**
(21) Anmeldenummer: 02400029.1
(22) Anmeldetag: 17.05.2002
(51) Int. Cl.: G06F 9/44

(54) **Verfahren, Software-Produkt und System zur universellen computergestützen Informationsverarbeitung**

(30) Priorität: 07.03.2002 DE 10211436
(71) Anmelder: Infix Software-Systeme GmbH, 20354 Hamburg (DE)
(72) Erfinder: Okrongli, Oliver, 22399 Hamburg (DE)

(57) **Zusammenfassung**

Gezeigt wird ein Verfahren, Software-Produkt und System zur maschinell ausführbaren Informationsverarbeitung, das Informationen in einer hierarchischen Struktur mit mindestens zwei Hierarchieebenen repräsentiert, wobei der Strukturaufbau durch Eingabemittel modellierbar ist und der Inhalt von Elementen jeweils wahlweise
a) durch Eingabemittel manipulierbar ist oder
b) durch maschinelle Auswertung eines durch Eingabemittel manipulierbaren Ausdrucks ermittelt wird.

Bevorzugte Ausführungen umfassen die getrennte Modellierung in einer Objekt- und einer Klassen-Hierarchie, manipulierbare Parameter zur Aktivierung verschiedener Darstellungs- und Bearbeitungsmodi und eine verteilte Parallelverarbeitung mit Benutzer- und/oder maschinell gesteuerter Interaktion.

Das Verfahren dient der programmierfreien Erzeugung und Ausführung komplexer Informationssysteme, wie sie insbesondere für administrative Aufgaben eingesetzt werden (z.B. für Auftragsbearbeitung, Einkaufsabwicklung, Kundenbetreuung).

## Beschreibung

### 1. Technisches Gebiet der Erfindung

Die Erfindung betrifft ein programmierfreies Verfahren zur automatischen Erzeugung strukturierter Informationssysteme auf der Grundlage hierarchischer, speziell objektorientierter, Modellierung.

### 2. Stand der Technik und Mängel bekannter Ausführungen

Die Erzeugung komplexer Informationssysteme, wie sie insbesondere für administrative Aufgaben eingesetzt werden (z.B. für Auftragsbearbeitung, Einkaufsabwicklung, Kundenbetreuung), erfordert heute einen Entwicklungsprozess. Dieser umfasst eine Abfolge von Phasen, begonnen bei der Formulierung einer Aufgabe, über Spezifikation, Modellierung, Programmierung in einer Hochsprache, Übersetzung in Maschinensprache (oder Interpretation) bis hin zur Ausführung durch programmierbare Hardware. Die Entwicklungsphasen von der Aufgabenformulierung bis zur Programmierung erfolgen (ggf. mit computerunterstützten Teilschritten) manuell. Sie erfordern einen hohen personellen Aufwand und sind fehleranfällig.

Seit etwa 1979 sind in Gestalt von Tabellenkalkulationsprogrammen Software-Werkzeuge bekannt, die es dem Benutzer ermöglichen, Informationen in tabellarischer Form zu repräsentieren und durch Interpretation von Ausdrücken (Formeln) abgeleitete Informationen zu generieren. Durch geeignete Konfiguration (Tabellenaufbau und Spezifikation von Ausdrücken) können mit diesen Werkzeugen Lösungen für ein breites Aufgabenspektrum gebildet werden, ohne dass eine aufwändige Programmierung erforderlich wird. Für komplexe Informationssysteme (z.B. Auftragsbearbeitung, Einkaufsabwicklung, Kundenbetreuung) bieten Tabellenkalkulationsprogramme jedoch keine adäquaten Strukturierungsmöglichkeiten. Sie werden deshalb nur für Aufgaben geringer Komplexität eingesetzt.

### 3. Gestellte Aufgabe und erfindungsgemäße Lösung

Der Erfindung liegt die Aufgabe zugrunde, ein effizienteres und weniger fehlerträchtiges Verfahren zur Erzeugung von Informationssystemen zu schaffen. Das Verfahren soll Informationssysteme eines möglichst großen Komplexitätsbereichs erzeu-gen können, einen hohen Automatisierungsgrad aufweisen und einfach zu handhaben sein.

Die erfindungsgemäße Lösung dieser Aufgabe besteht in einem Verfahren mit den Merkmalen des Patentanspruchs 1, einem Software-Produkt mit den Merkmalen des Patentanspruchs 11 und einem System mit den Merkmalen des Patentanspruchs 12. Die abhängigen Patentansprüche betreffen bevorzugte Ausgestaltungen der Erfindung.

Das Verfahren setzt sich vorzugsweise zusammen aus Schritten zur Modellierung einer hierarchischen Datenstruktur, Manipulation von Inhalten in Elementen der Hierarchie, Generierung von Inhalten für Elemente der Hierarchie durch Auswertung von Ausdrücken, sowie zur Darstellung von Hierarchie und Element-Inhalten.

Mit Hardware sind hier Mittel zur Ausführung der genannten Operationen gemeint, insbesondere ein oder mehrere Computer mit Prozessor, Speicher, Ein- und Ausgabegeräten. Das Software-Produkt ist die Materialisierung von Software, insbesondere auf Speichermedien, die Hardware so steuern kann, dass sie die vorgenannten Operationen ausführen kann. Mit System wird eine Kombination von Hardware und Software bezeichnet, die die vorgenannten Operationen ausführen kann.

Die Erfindung geht von der Erkenntnis aus, dass betriebliche Informationssysteme, wie sie z.B. für Auftragsbearbeitung, Einkaufsabwicklung und Kundenbetreuung eingesetzt werden, sich auf folgende Grundmerkmale reduzieren lassen:
1. Sie repräsentieren strukturierte Informationen. Aus Elementar-Strukturen (z.B. Texten, Zahlen) werden höhere Strukturen (z.B. Adressen, Auftragspositionen) zusammengesetzt, die wiederum Bestandteile von Strukturen noch höherer Ordnung bilden (z.B. Aufträge).
2. Ein Teil der Informationen wird von Benutzern erfasst und bearbeitet oder von Fremdsystemen geliefert bzw. verändert.
3. Ein anderer Teil der Informationen wird vom System durch Ableitung aus den übrigen Informationen generiert, z.B. durch Summenbildung, Auswahl von Teilmengen oder gesonderte Zusammenstellung (z.B. Darstellung an anderer Stelle, in anderer Reihenfolge).
   Die Erfindung nutzt daher in ihrer bevorzugten Ausgestaltung als Datenstruktur eine hierarchische Repräsentation und eine Verfahrens-Komponente zur dynamischen Modellierung derselben. Verglichen mit feststehenden Tabellen bedeutet dies einen wesentlich höheren verfahrenstechnischen Aufwand. Doch gerade die sich daraus ergebende Funktionalität ermöglicht es dem Benutzer, durch bloße Modellierung komplexe Informationssysteme zu erzeugen, die bisher nur mit umfangreicher manueller Programmierung entwickelt werden konnten.
   Der Begriff Modellierung im Sinne dieser Beschreibung umfasst insbesondere die tatsächliche Einwirkung auf den Aufbau der hierarchischen Struktur, z.B. durch Hinzufügen und Löschen von Elementen, einschließlich ganzer Teilhierarchien, anstatt sich etwa auf deren bloßes Aus- und Einblenden zu beschränken.
   Eine bevorzugte Ausgestaltung des Verfahrens gestaltet die Modellierung objektorientiert. Als objektorientiert gilt hier jede Art der Modellierung, die Aufbau oder Eigenschaften gleichartiger Strukturen separat von deren konkreter Ausprägung (Inhalt) repräsentieren kann. Der übliche Begriff für eine konkrete Ausprägung ist Objekt. Eine Spezifikation gleichartiger Objekte ist eine Klasse. Ausführungsalternativen können sich hinsichtlich des Umfangs der in einer Klasse spezifizierbaren Eigenschaften unterscheiden. Sie können sowohl explizit in Erscheinung tretende Klassen vorsehen, die z.B. mit Namen versehen werden, als auch implizit vorhandene Klassen. Ausführungsalternativen können Generalisierungs-/Spezialisierungsbeziehungen zwischen Klassen vorsehen, müssen dies aber nicht.
   In einer bevorzugten Ausgestaltung sorgt die Modellierungs-Komponente des Verfahrens dafür, dass die hierarchische Repräsentation durch Eingabemittel an beliebige Erfordernisse angepasst werden kann, z.B. durch Einfügung und Löschung von Elementen innerhalb der Hierarchie.
   Die zugehörige Verfahrens-Komponente zur Manipulation von Inhalten verwendet Eingabemittel, um Elemente der modellierten Hierarchie zu adressieren und Inhalte (z.B. Texte, Zahlen) zuzuweisen oder zu ändern.
   Die Auswertungs-Komponente dieser Ausgestaltung generiert Inhalte von Elementen durch Auswertung von benutzer-spezifizierten Ausdrücken und ermöglicht so die geforderte Bildung abgeleiteter Informationen.
   Die Darstellungs-Komponente erlaubt durch Ein- und Ausgabemittel den Zugriff auf die hierarchische Struktur und ihre Inhalte.
   Die genannten Ein- und Ausgabemittel können beliebig ausgestaltet sein. Interaktiv/visuelle Mittel, wie z.B. eine grafische Benutzungsoberfläche mit Maussteuerung, sind ebenso vorgesehen, wie maschinelle Mittel, z.B. Kommunikationsprotokolle zur Kommunikation mit Fremdsystemen.
   Die Erfindung reduziert den Aufwand zur Erzeugung komplexer Informationssysteme, indem sie durch Automatisierung die zeitaufwändige traditionelle Programmierphase eliminiert. Sie steigert dadurch die Effizienz auch in den übrigen Entwicklungsphasen, weil nach der Modellierung jeweils eine sofort funktionsfähige Realisierung vorliegt, die auf Praktikabilität geprüft werden kann. In der Folge reduzieren sich Anzahl und Dauer der Phasen-Iterationen.
   Befindet sich ein mit dieser Erfindung erzeugtes Informationssystem bereits im Produktivbetrieb, kann es jederzeit mit geringem Aufwand durch einfache Modelländerung an sich ändernde Erfordernisse angepasst werden. Die Erfindung ermöglicht für dieses in der betrieblichen Praxis häufige Szenario kurze Reaktionszeiten und damit eine höhere betriebliche Agilität.
   Ein weiterer Vorzug beim Einsatz der Erfindung ist die Erhöhung des Abstraktionsniveaus, indem das Modell direkt ausgeführt wird. Personen, die über eine ausreichende Modellierungs-Qualifikation verfügen, können damit funktionsfähige Informationssysteme produzieren, ohne selbst programmieren zu müssen. Zudem ist ein so produziertes Informationssystem in hohem Maße selbstdokumentierend. Die höhere Abstraktionsebene befreit es von nicht aufgabenbezogenen, technischen Details und ermöglicht ein schnelles Verständnis für einen weiten Nutzerkreis, einschließlich nichttechnischer Nutzer.
   Die Erfindung kann neben einer eigenständigen Nutzung mit interaktiven Benutzern auch zur Integration von Informationen aus Fremdsystemen eingesetzt werden, weil ihre Struktur sich an die Erfordernisse der Fremdsysteme anpassen lässt. Unterschiede in der Semantik und Inkompatibilitäten zwischen verschiedenen Fremdsystemen können kompensiert werden, indem mit dem Mittel der Ausdrucks-Auswertung die Informationen entsprechend konvertiert werden. Diese Integrationsfunktionalität lässt sich auch zur rein maschinellen Kopplung ansonsten inkompatibler Fremdsysteme nutzen.
   Eine Ausführung ermöglicht nicht nur den Mehrbenutzer- und Mehrsystembetrieb, sondern ermöglicht durch verteilte Verarbeitung eine automatische Skalierung über mehrere Prozessoren und/oder Systeme, ohne dass dies eine dafür traditionell erforderliche komplexe Programmierung erfordert

### 4. Zeichnungen

Fig. 1 zeigt eine modellierbare Hierarchie in ihrer einfachsten Ausprägung.
Fig. 2 veranschaulicht eine einfache Ausdrucks-Auswertung mit zu registrierenden Abhängigkeiten.
Fig. 3 veranschaulicht eine Ausdrucks-Auswertung mit auszuwertender Listen-Referenz.
Fig. 4 zeigt eine Kombination von Objekt- und Klassen-Hierarchie.
Fig. 5 zeigt die Bestandteile einer Zahlen-Klasse.
Fig. 6 zeigt die Bestandteile einer Container-Klasse.
Fig. 7 zeigt eine Ausführungsvariante mit verteilter Verarbeitung.

### 5. Ausführungsbeispiele

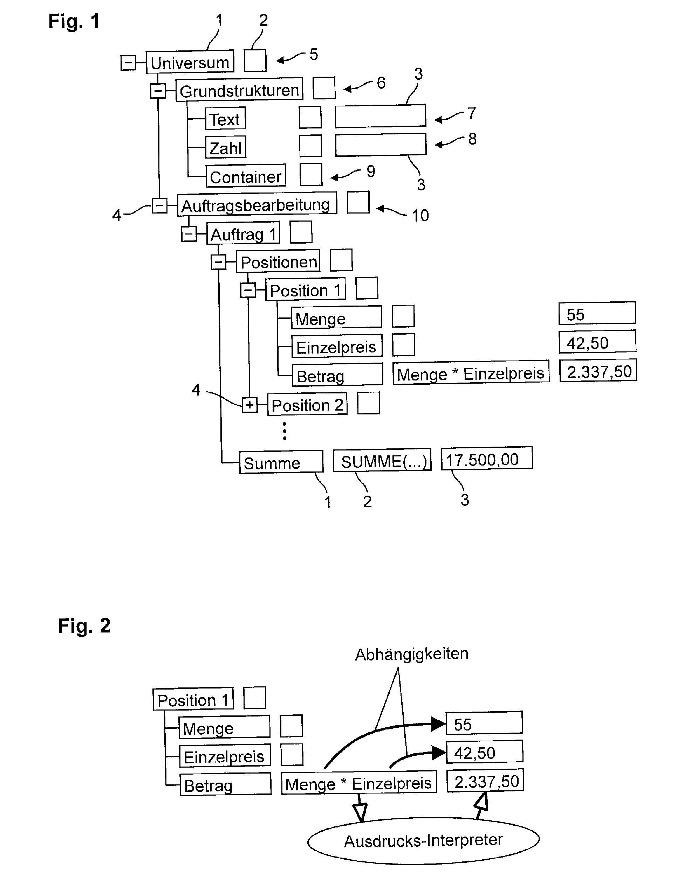

Fig. 1 zeigt eine beispielhafte Hierarchie, wie sie in einer Ausführungsalternative mittels einer grafischen Benutzungsoberfläche dargestellt werden kann. Die Hierarchie besteht aus Elementen, die jeweils die Attribute "Name" (1) und "Ausdruck" (2) beinhalten. Beide Attribute sind über Editierfelder manipulierbar. Bedienelemente (4) dienen zum Aus- und Einklappen einzelner Hierarchieebenen.

Unterhalb der mit "Universum" bezeichneten Wurzel der Hierarchie (5) erscheint eine Teilstruktur "Grundstrukturen" (6). Diese enthält eine Reihe vorgefertigter Elemente mit vom Verfahren vorgegebenem, typspezifischen Verhalten, die verfahrensseitig bereitgestellt werden, hier "Text" (7), "Zahl" (8) und "Container" (9).

Die einfachen Elemente "Text" (7) und "Zahl" (8) verfügen über ein Inhalts-Attribut (3), das jeweils über ein Editierfeld manipulierbar ist. Falls ein Ausdruck (2) angegeben ist, ermittelt das Verfahren dessen Ergebnis und stellt es in das Inhalts-Attribut (3) ein. Dessen Editierfeld dient dann nur der Darstellung.

Ausführungsalternativen können weitere einfache Elemente vorsehen, wie z.B. Logikwert, Kalenderdatum, Uhrzeit, Zeitspanne, Bild. Auch ein Element zur Aufnahme des Dateiinhalts einer beliebigen Fremdanwendung ist vorgesehen. Für dessen Bearbeitung und Darstellung, die sowohl visuell integriert als auch in einem separaten Fenster erfolgen könnte, würde die zugehörige Anwendungssoftware aufgerufen.

Der Inhalt des Elements "Container" (9) besteht aus einer Liste untergeordneter Elemente. Die Liste kann leer sein, wie Fall von "Container" (9), oder eine beliebige Anzahl untergeordneter Elemente umfassen, hier zwei bei "Universum" (5) und drei bei "Grundstrukturen" (6). Zur Manipulation der Element-Liste beinhaltet das Verfahren mausgesteuerte Interaktion, insbesondere einen Drag&Drop-Mechanismus. Zum Hinzufügen eines untergeordneten Elements wird an anderer Stelle ein Element selektiert und dieses an der gewünschten Einfügeposition in Kopie abgelegt oder als Original an diese verschoben. Zum Löschen eines Elements wird dieses selektiert und per Menü der Löschbefehl gewählt. Falls für ein Container-Element ein Ausdruck angegeben ist, ermittelt das Verfahren dessen Ergebnis in Form einer neuen Liste untergeordneter Elemente und weist sie dem Container-Element zu. Die Liste der untergeordneten Elemente kann in diesem Fall interaktiv nicht verändert werden.

Ausführungsalternativen können weitere aggregierende Elemente vorsehen, insbesondere Liste, Menge und Multimenge. Deren untergeordnete Elemente hätten im Gegensatz zum Container kein Namens-Attribut.

Der Inhalt eines Elements kann auch ein Verweis auf ein anderes Element (das Verweisziel) sein. Das verweisende Element wird dann so behandelt, als besäße es eine stets aktuelle Kopie des Verweisziel-Inhalts. Zur Erstellung eines Verweises dient ein Drag&Drop-Mechanismus.

Mit den gezeigten Verfahrensschritten kann der Benutzer die in Fig. 1 gezeigte Teilstruktur unter dem Element "Auftragsbearbeitung" (10) vollständig modellieren. Die Elemente "Menge", "Einzelpreis", "Betrag" und "Summe" sind dabei Kopien des vorgefertigten Elements "Zahl" (8). Alle übrigen Elemente der Teilstruktur sind vom Typ "Container" (9).

Zur Verarbeitung von Ausdrücken kommt ein Interpreter zum Einsatz. Für Techniken zum Bau von Interpretern, insbesondere mit Hilfe von Parser-Generatoren, wird allgemein verwiesen auf das Buch "Compilers: Principles, Techniques, and Tools" von Alfred V. Aho, Ravi Sethi, Jeffrey D. Ullman, Addison-Wesley, 1985. Einen neueren, leistungsfähigeren Parser-Generator beschreibt zudem die Website http://www.antlr.org.

Um einem möglichst breiten Aufgabenspektrum gerecht zu werden, sind zur Ausdrucks-Auswertung folgende Komponenten als Teil von Ausdrücken vorgesehen:
- Literale (Texte, Zahlen, Logikwerte),
- Arithmetik-Operationen (Addition, Multiplikation, etc.),
- Logik-Operationen (Vergleiche, Verknüpfungen wie "UND", "ODER", "NICHT"),
- bedingte Ausdrücke, die in Abhängigkeit von einer Bedingung a das Ergebnis eines abhängigen Ausdrucks b oder c liefern ("WENN a DANN b SONST c"),
- Text-Operationen (Substring-Bildung, Längenermittlung, etc.),
- Referenzen (Bezugnahme auf ein Element über seinen Namen, einschließlich Pfadbildung wie "Auftrag_A!Lieferanschrift!Postleitzahl"),
- Listenreferenzen (Bezugnahme auf eine Liste von Elementen über Pfadbildung mit Platzhaltern wie "Positionen!*!Betrag"),
- Aggregats-Funktionen, deren Argument eine Listenreferenz ist (SUMME(...), ANZAHL(...), MINIMUM(...), etc.),
- Eine Operation (ENTHÄLT-Operator), die WAHR liefert, wenn ein Element Teil einer Liste ist (Liste ENTHÄLT Element).
Ausführungsalternativen können weitere Komponenten in Ausdrücken vorsehen.

Die meisten Ausdrücke liefern einen Einzelwert, der dem Inhalt eines einfachen Elements (Text, Zahl, etc.) zugewiesen wird. Ein Ausdruck, der das Ergebnis einer Listenreferenz nutzt, liefert hingegen eine Liste von Verweisen auf Elemente. Solche Ausdrücke werden nur für aggregierende Elemente akzeptiert, deren Liste untergeordneter Elemente sie dann erzeugen.

Ändert sich ein Element-Inhalt, oder wird ein Element hinzugefügt oder gelöscht, ist es potenziell erforderlich, Ausdrücke neu auszuwerten. Um nicht bei jeder Änderung sämtliche Ausdrücke aktualisieren zu müssen, beinhaltet eine Ausführungsvariante ein optimiertes Verfahren. Dabei werden während der Interpretation eines Ausdrucks Abhängigkeiten analysiert und gemeinsam mit dem Ergebnis des Ausdrucks gespeichert. Eine Element-Abhängigkeit ist jeweils ein Tupel (AE, RE) wobei AE ein abhängiges Element und RE ein vom zu AE gehörenden Ausdruck referenziertes Element ist. Vorausgesetzt wird, dass die Elemente für diesen Zweck direkt (über ein Zeigerkonstrukt) adressiert werden können. Ein einfaches Beispiel zeigt Fig. 2.

Im Fall einer einfachen Pfad-Referenz wird für jedes Pfad-Element PEᵢ eine Element-Abhängigkeit (AE, PEᵢ) eingetragen. Für die einfache Pfad-Referenz "Auftrag_A!Lieferanschrift!Postleitzahl" würden also 3 Element-Abhängigkeiten, nämlich auf "Auftrag_A", "Lieferanschrift" und "Postleitzahl" eingetragen.

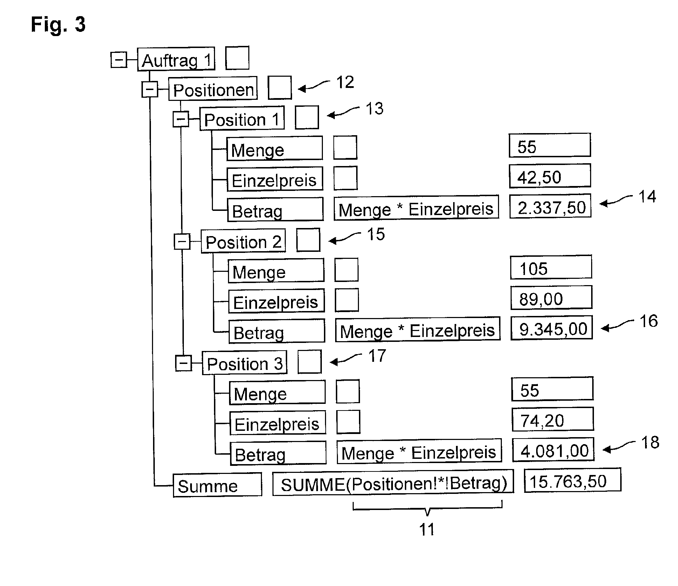

Im Fall einer Listenreferenz ist für jedes Element PEᵢ, das auf dem Weg vom Start-Element des Pfades zum jeweils gefundenen Listen-Element ist, eine Element-Abhängigkeit einzutragen. Für die in Fig. 3 gezeigte Listen-Referenz "Positionen!*!Betrag" (11) wären also, weil die Auswertung des Platzhalters "*" 3 Elemente ("Position 1", "Position 2", "Position 3") liefert, insgesamt 7 Element-Abhängigkeiten einzutragen, nämlich auf "Positionen" (12), "Position 1" (13), "Position 1!Betrag" (14), "Position 2" (15), "Position 2!Betrag" (16) und "Position 3" (17), "Position 3!Betrag" (18).

Für den Platzhalter "*" ist eine zusätzliche Komponenten-Abhängigkeit zu registrieren, um den Fall zu berücksichtigen, dass unterhalb des Start-Elements, von dem aus die Platzhalter-Suche ausgeht, ein neues Element eingefügt wird. Eine Komponenten-Abhängigkeit ist jeweils ein Tupel (AE, SE) wobei AE ein abhängiges Element und SE das Start-Element des Platzhalters im zu AE gehörenden Ausdruck.

Abhängigkeiten müssen jeweils nur für den Teil eines Ausdrucks registriert werden, der zum aktuell ermittelten Ergebnis beiträgt. Liefert in einem Ausdruck "WENN a DANN b SONST c" der Teilausdruck "a" WAHR, sind lediglich Abhängigkeiten der Teilausdrücke a und b zu registrieren, nicht jedoch solche des Teilausdrucks c. Jede Auswertung eines Ausdrucks ermittelt die registrierten Abhängigkeiten neu.

Wenn der Inhalt eines referenzierten Elements RE sich ändert oder ungültig wird, werden die Inhalte aller davon abhängigen Elemente AEᵢ, für die eine Element-Abhängigkeit (RE, AEᵢ) existiert, als ungültig gekennzeichnet. Der Vorgang wird für jedes der abhängigen Elemente rekursiv wiederholt.

Wenn ein neues Element eingefügt wird, werden die Inhalte aller vom übergeordneten Element UE abhängigen Elemente AEᵢ, für die eine Komponenten-Abhängigkeit (UE, AEᵢ) existiert, als ungültig gekennzeichnet. Die weitere Verarbeitung der Ungültigkeitserklärung für diese Elemente erfolgt wie im vorangehenden Absatz beschrieben.

Anstatt ungültig gewordene Inhalte sofort neu zu ermitteln, kann abgewartet werden, bis sie für die Darstellung oder zur Auswertung eines sie referenzierenden Ausdrucks benötigt werden (lazy evaluation). Ein Gültigkeitskennzeichen wird dazu zusammen mit dem Inhalt gespeichert.

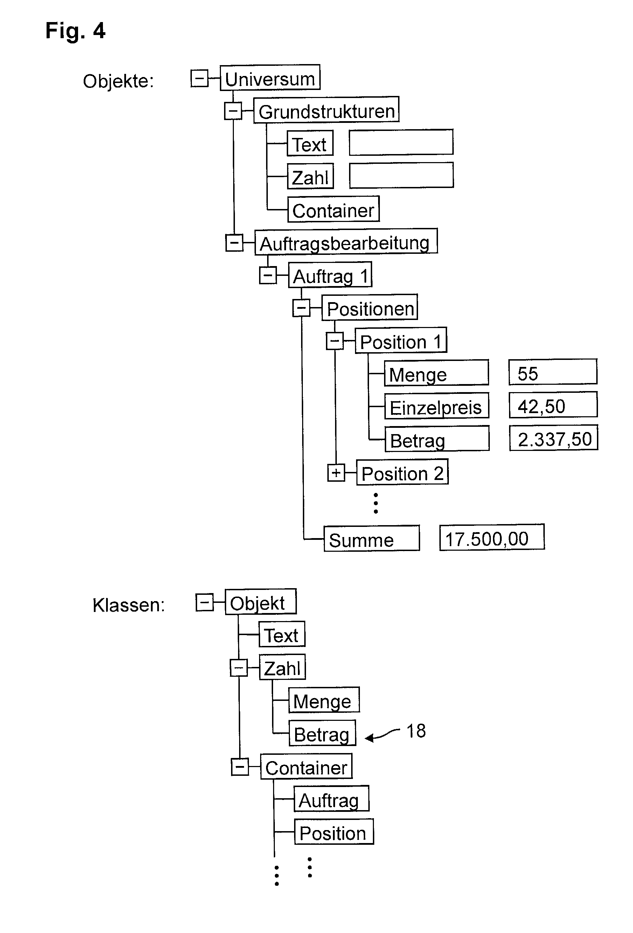

Eine weitere Ausführung erweitert das bisher Dargestellte um eine Variante für objektorientierte Modellierung. Die Funktionen der bisherigen Hierarchiestruktur werden dazu auf zwei Hierarchien verteilt, nämlich Objekt- und Klassen-Hierarchie. Eine zur bisherigen Ausführung analoge Konfiguration von Objekt- und Klassen-Hierarchie zeigt Fig. 4. Dabei wurden der Übersichtlichkeit halber alle Container-Klassen weggelassen, die keine besondere Funktion neben der Aggregation von Elementen haben (dies sind Container der Elemente "Universum", "Grundstrukturen", "Auftragsbearbei-tung", "Positionen").

Die Objekt-Hierarchie entspricht der bisherigen Hierarchie mit dem Unterschied, dass je Element das Ausdrucks-Attribut entfällt und ein Zeiger auf ein Klassen-Element hinzukommt.

Klassen sind in einer eigenen Hierarchie angeordnet, die die Generalisierungs-/Spezialisierungs-Beziehungen zwischen Klassen beschreibt. Klassen fassen die Eigenschaften gleichartiger Objekte zusammen und reduzieren so die ansonsten in der Objekt-Hierarchie auftretende Redundanz. Enthält die Objekt-Hierarchie beispielsweise 2000 Objekte der Klasse "Position" und soll der Ausdruck zur Berechnung des Elements "Betrag" geändert werden, wären in der bisherigen Ausführung Änderungen an 2000 Stellen erforderlich. Mit der Klassen-Hierarchie genügt nun eine einzige Änderung im zugehörigen Klassen-Element.

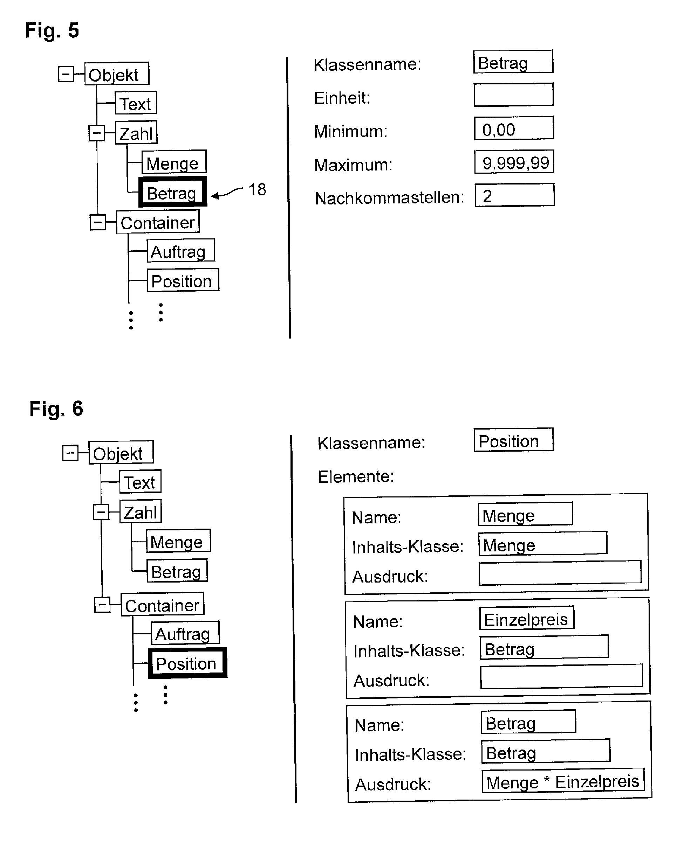

Bestandteile von Attribut-Klassen (Klassen einfacher Elemente, wie z.B. Text, Zahl) sind Angaben zur Darstellung (z.B. Länge, Nachkommastellen) und ggf. Integritätsbedingungen (z.B. Mindestwert, Maximalwert). Alle Angaben können über Editierfelder manipuliert werden. Das entsprechende Bildschirmformular erscheint, neben der Klassen-Hierarchie, wenn eine entsprechende Attribut-Klasse selektiert ist. Fig. 5 zeigt ein Beispiel für die in Fig. 4 dargestellte Zahlen-Klasse "Betrag" (18).

Aggregats-Klassen (Klassen aggregierender Elemente, wie z.B. Container, Liste) beinhalten Klassen-Elemente. Eine Container-Klasse enthält eine interaktiv (per Drag&Drop) manipulierbare Liste von Klassen-Elementen; jeweils eins für jedes untergeordnete Element des zugehörigen Container-Objekts. Listen- und Mengen-Klassen enthalten jeweils nur ein Klassen-Element, weil die untergeordneten Elemente von Listen- und Mengen-Objekten einheitlich sind.

Ein Klassen-Element bestimmt das Verhalten eines Objekt-Elements; es beinhaltet insbesondere den zugehörigen Ausdruck und die als Inhalt des Objekt-Elements akzeptierte Klasse. Klassen-Elemente von Container-Klassen beinhalten zusätzlich den Namen. Die Angaben können über Editierfelder manipuliert werden. Ein Beispiel für Klassen-Elemente einer Container-Klasse veranschaulicht Fig. 6.

Eine (Klassen-)Spezialisierung ist an die Vorgaben ihrer Generalisierung(s-Klasse) gebunden. Für die Spezialisierung einer Zahlen-Klasse werden z.B. Mindest- und Maximalwert nur im Rahmen der Vorgaben ihrer Generalisierung akzeptiert. In einer spezialisierten Container-Klasse wird die Löschung eines von der Generalisierung stammenden Elements verweigert. Eine Änderung der Angaben einer Generalisierung bewirkt automatisch eine Anpassung aller Spezialisierungen derselben. Eine Klasse kann mehrere Generalisierungen besitzen (sie erscheint dann an mehreren Stellen der Klassen-Hierarchie).

Die Klassen-Hierarchie wird mit zur Objekt-Hierarchie analogen Interaktionsmechanismen, insbesondere Drag&Drop bearbeitet. Dabei gilt: wird eine Klasse A unterhalb einer Klasse B platziert, macht dies A zur Spezialisierung von B. A wird dabei entsprechend angepasst, insbesondere würde eine Container-Klasse A alle Elemente von B hinzugewinnen, die A und B nicht bereits zuvor (über eine gemeinsame Generalisierung) gemeinsam besitzen. Als zusätzliches Bearbeitungsmittel existiert eine menügesteuerte Operation, die zu einer zuvor ausgewählten Klasse eine Spezialisierung erzeugt.

Wird eine mehrere Generalisierungen besitzende Klasse an einer Stelle innerhalb der Klassen-Hierarchie gelöscht, löscht dies zunächst nur die Generalisierungs-/Spezialisierungsbeziehung an dieser Stelle. Die Klasse selbst wird erst gelöscht, wenn keine weiteren Generalisierungen existieren.

Eine Änderung der Angaben einer Klasse bewirkt automatisch eine Anpassung aller Objekte dieser Klasse. So bewirkt z.B. die Löschung des Elements einer Container-Klasse die Löschung aller zugehörigen Objekt-Elemente.

Als zusätzliche Ausführungsvariante können bestimmte Strukturänderungen auch auf Objekt-Ebene erfolgen, insbesondere das Hinzufügen und Löschen von Elementen eines Container-Objekts. Auf diese Weise kann z.B. in einem Auftrag eine Auftragsposition hinzugefügt oder gelöscht werden. Eine derartige Manipulationsfunktion wird realisiert, indem die auf Objekt-Ebene ausgelöste Manipulation eines Container-Objekts C auf der Klassen-Ebene implizit eine Spezialisierung der zu C gehörenden Container-Klasse erzeugt und diese Spezialisierung nun als neue Klasse des geänderten Container-Objekts C gilt. Dies verhindert, dass die Änderung ungewollt auf andere Objekte der ursprünglichen Klasse wirkt. Die Bildung einer Klassen-Spezialisierung braucht für nachfolgende Änderungen des Objekts nicht wiederholt zu werden, solange das Objekt das einzige seiner Klasse bleibt.

Die Klassen-basierte Ausführungsvariante beinhaltet zusätzliche Formen der Ausdrucks-Auswertung. Die Auswertung der Ausdrucks-Funktion "KOMPONENTEN(Klasse)" liefert alle untergeordneten Elemente, deren Inhaltsklasse der angegebenen Klasse (einschließlich ihrer Spezialisierungen) entspricht. So würde "KOMPONENTEN(Position)" ausgehend vom aktuellen Objekt die Menge aller untergeordneten Objekte liefern, die die Klasse "Position" (oder eine Spezialisierung) besitzen.

Eine Variante dieser Funktion beinhaltet zusätzlich einen Bedingungs-Ausdruck: "KOMPONENTEN(Klasse WENN Bedingung)". Der Bedingungs-Ausdruck wird dabei jeweils relativ zum betrachteten Objekt der Suchklasse ausgewertet. Die Funktion beschränkt gegenüber der Ausgangsvariante die gelieferten Elemente auf solche, für die die Bedingung erfüllt ist. Z.B. würde "KOMPONENTEN(Position WENN Betrag > 5000)" alle Positionen liefern, deren Betrag 5000 übersteigt.

Die Ausdrucks-Auswertung kann so ausgeführt werden, dass sie das aus der Objektorientierung bekannte Konzept der Polymorphie nutzt. Dabei wäre jedes Objekt-Element in der Lage, einen Inhalt nicht nur in der für das Element festgelegten Klasse K zu akzeptieren, sondern auch in Gestalt einer Spezialisierung SKᵢ. Zu Zwecken der Ausdrucks-Auswertung würde ein Inhalt der Klasse SKᵢ jeweils in die Form der Klasse K überführt.

Eine weitere Ausführungsvariante führt je Element zusätzliche Modus-Parameter ein, die verschiedene Darstellungs- und Bearbeitungsmodi eines Elements steuern. Ein Modus-Parametersatz je Element umfasst folgende durch Eingabemittel (insbesondere Drop-Down-Menüs) manipulierbare Angaben:

Ein Berechtigungs-Parameter mit den Alternativen "keine Darstellung", "nur lesend", "lesend und schreibend" steuert, ob ein Element überhaupt dargestellt wird und ob es vom Benutzer verändert werden darf.

Ein Gestalt-Parameter mit den Alternativen "individuell" oder "einheitlich" steuert, ob der Inhalt in Gestalt seiner spezifischen Klasse (einer Spezialisierung der im Klassen-Element festgelegten Klasse) dargestellt wird, oder zur Darstellung in die im Klassen-Element festgelegten Klasse überführt wird (Polymorphie, nur in der klassenbasierten Ausführungsvariante zutreffend).

Ein Anordnungs-Parameter mit den Alternativen "hierarchisch", "tabellarisch", "einzeilig" steuert die Anordnung untergeordneter Elemente, so dass neben der hierarchischen Anordnung auch eine (automatisch generierte) Tabelle oder die sequenzielle Anordnung in einer Zeile (zweckmäßig z.B. für "Menge" gefolgt von "Mengeneinheit") möglich ist.

Ein Verweisziel-Parameter mit den Alternativen "integriert" und "in separatem Fensterbereich" steuert, ob der Inhalt des Verweisziels wie ein originär eigener Inhalt (integriert) dargestellt wird, oder nur eine Schaltfläche, die angeklickt werden kann und dann in einem separaten Fensterbereich den Verweisinhalt darstellt.

Weitere Ausführungsvarianten können zusätzliche Modus-Parameter aufweisen. Einige Modus-Parameter (z.B. der Verweisziel-Parameter) betreffen ausschließlich die Interaktion mit Benutzern. Andere wirken ebenso während einer maschinellen Nutzung des Systems. Der Berechtigungs-Parameter "keine Darstellung" führt beispielsweise dazu, dass das zugehörige Element über ein Kommunikationsprotokoll nicht abrufbar ist. Analog bewirkt ein Berechtigungs-Parameter "nur lesend", dass eine über ein Kommunikationsprotokoll initiierte Inhaltsänderung abgelehnt wird.

Eine weitere Ausführungsvariante umfasst je Objekt- oder Klassen-Element eine Liste, deren Elemente jeweils aus einem Bedingungs-Ausdruck und einem Modus-Parametersatz bestehen. Zur Ermittlung des für ein Element gültigen Modus-Parametersatzes wird in der Listen-Reihenfolge jeweils der Bedingungs-Ausdruck ausgewertet, der einen Logikwert liefern muss. Liefert er WAHR, gilt der zugehörige Modus-Parametersatz. Andernfalls wird die Ermittlung mit dem nächsten Listen-Element fortgesetzt. Ein fehlender Ausdruck wird stets als WAHR gewertet.

Mit dieser Variante können Darstellungs- und Bearbeitungsmodi in Abhängigkeit vom Inhalt des zugehörigen Elements, aber auch von beliebigen Inhalten der Objekt-Hierarchie aktiviert werden. Weil dort prinzipiell auch Informationen über die Benutzer des Systems und ein Berechtigungskonzept hinterlegt werden können, lässt sich mit diesen Mitteln ein komplexes System zur Zugangsberechtigung modellieren und konfigurieren. Um den Benutzer der jeweiligen Sitzung zur Laufzeit abrufen zu können, wird die Ausdrucksauswertung um die Ausdrucks-Funktion "BENUTZER()" ergänzt. Ist ein Rollenkonzept gewünscht, würde ein Ausdruck der Art !Orga!KOMPONENTE(Benutzer WENN Name = BENUTZER())!Rollen ENTHÄLT !Orga!Rollen!Controller ermitteln, ob der aktuelle Benutzer die hier erforderliche Berechtigung eines Controllers besitzt. Neben unterschiedlichen Zugriffsberechtigungen kann der Benutzer so auch rollenspezifische Darstellungen einrichten.

In der Ausführung mit einem Klassen-Modell sind die Modus-Parameter für Darstellungs- und Bearbeitungsformen zweckmäßigerweise bei den Klassen-Elementen anzusiedeln.

Die vom Verfahren bearbeiteten Informationen werden im Regelfall auf Datenträgern gespeichert. Dazu kommen insbesondere objektorientierte oder relationale Datenbanksysteme zum Einsatz. Für den Mehrbenutzerbetrieb werden übliche Sperrmechanismen (Read- und Write-Locks) auf Klassen- und Objektebene verwendet, die Änderungskonflikte während paralleler Bearbeitung durch verschiedene Benutzer ausschließen.

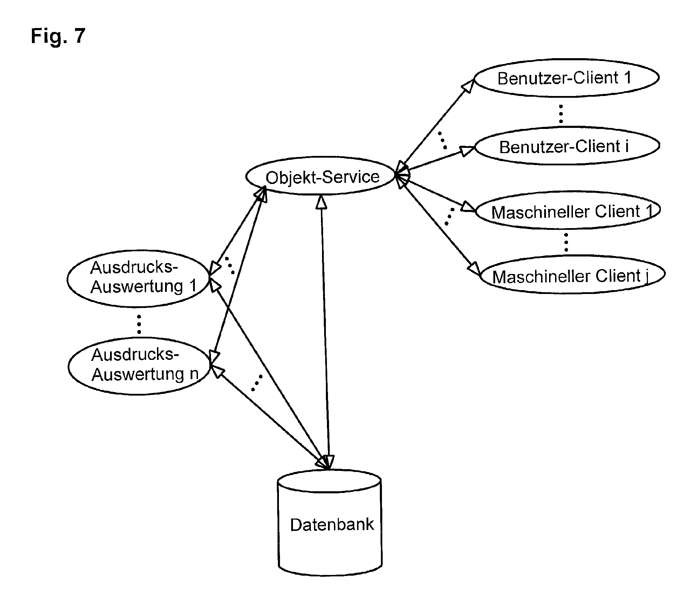

Eine weitere Ausführungsvariante parallelisiert die Verarbeitung durch Verteilung auf mehrere Prozessoren oder Hardware-Systeme und kann zugleich mit Benutzern, als auch mit Maschinen interagieren, wie in Fig. 7 gezeigt. Dabei kommuniziert ein zentraler Dienst (Objekt-Service) mit Benutzer- und/oder maschinellen Clients, die auf der gleichen oder einer anderen vernetzten Hardware ablaufen können. Die Kommunikation erfolgt auf unteren Ebenen über beliebige Transportprotokolle (z.B. TCP, HTTP), auf oberster Ebene über ein geeignetes Inhalts-Protokoll (z.B. auf der Basis von XML, das die Objekt- und Klassen-Hierarchien direkt abbilden kann). Das Inhalts-Protokoll wird bidirektional genutzt, sowohl für Anfragen der Clients, als auch für Antworten des Objekt-Service. Es bildet sämtliche Operationen ab, die interaktiv durchführbar sind, einschließlich des Abrufs und der Manipulation von Metainformationen (Klassen). Die erforderlichen Datenstrukturen lassen sich unmittelbar aus den bereits beschriebenen Visualisierungen ableiten. Zur Angabe einer Hierarchieposition, z.B. beim Einfügen einer Klasse, dient die bereits für die Ausdrucks-Auswertung beschriebene Pfadbildung. Sämtliche Objekte, Klassen und Klassen-Elemente können zudem mit einer eindeutigen Identifikation (z.B. einer automatisch generierten Seriennummer) versehen werden. Damit steht eine kurze Form der direkten Adressierung zur Verfügung. Für eine mögliche Protokoll-Implementierung wird allgemein auf die XML-Spezifikationen (http://www.w3.org/XML/) und den Standardisierungsvorschlag SOAP (http://www.w3.org/TR/SOAP/) verwiesen.

Falls ein Client Inhalte anfordert, die erst durch die Ausdrucks-Auswertung ermittelt werden müssen, wird der Objekt-Service nach Wahl des Clients die Auswertung entweder sofort vornehmen und den Client ggf. warten lassen, oder den Client später durch asynchrone Benachrichtigungen über eingetretene Änderungen informieren. Der Objekt-Service wird einen Client ebenfalls über Änderungen informieren, die durch andere Clients an gemeinsam genutzten Objekten vorgenommen wurden. Der Objekt-Service nutzt dazu ein Verzeichnis, das jedes aktuell von irgendeinem Client genutzte Objekt enthält.

Die Ausdrucks-Auswertung kann vom Objekt-Service als zentraler Koordinierungsinstanz an separate Auswertungs-Prozesse delegiert werden. Die Anforderung von Inhalten, die eine Ausdrucks-Auswertung erforderlich machen, kommt zunächst von den Clients. Solche Anforderungen können in einer Warteschlange gesammelt und reihum an den jeweils nächsten freien Auswertungs-Prozess delegiert werden. Der gilt dann als beschäftigt, bis er dem Objekt-Service eine Fertigmeldung übermittelt. Während der Ausdrucks-Auswertung wird es vorkommen, dass ein Auswertungs-Prozess auf einen Inhalt wartet muss, den ein anderer Auswertungs-Prozess ermittelt. Für die erforderliche Synchronisation führt der Objekt-Service ein Verzeichnis über Inhalte, die gerade ermittelt werden und den zugehörigen Auswertungs-Prozess. Eine Deadlock-Erkennung muss Zyklen erkennen, bei denen zwei Auswertungs-Prozesse - direkt oder indirekt - aufeinander warten. Ist dies der Fall, wird einem der beiden Auswertungs-Prozesse die Auswertung entzogen und dem anderen übertragen. Der Objekt-Service als zentrale Instanz koordiniert ferner auch Zugriffskonflikte zwischen Auswertungs-Prozessen untereinander und mit Clients.

Weitere Ausführungsalternativen können geeignete Partitionierungsverfahren anwenden, um die Menge der auszuwertenden Ausdrücke vor der Zuweisung an Auswertungs-Prozesse so zu zerlegen, dass die Anzahl gegenseitiger Abhängigkeiten von Ausdrücken, die durch getrennte Prozesse auszuwerten sind, minimiert wird.

Eine weitere Ausführungsvariante erweitert die Ausdrucks-Auswertung um eine Schnittstelle zum Aufruf externer Funktionen, die über eine dynamische Bibliothek (DLL, Shared Library) hinzugebunden werden. Dabei kann grundsätzlich davon ausgegangen werden, dass eine externe Funktion beliebig viele Parameter erhalten kann (einschließlich einer variablen Parameterzahl) und einen Ergebniswert liefert. Beim Aufruf der externen Funktion muss diese die benötigten Parameter über eine Programmierschnittstelle anfordern. Die Ausdrucks-Auswertung wird bei Verwendung eines Parameters diesen als Teilausdruck auswerten und erforderliche Abhängigkeiten registrieren. Die Prüfung der korrekten Parameteranzahl und Parametertypen wäre Aufgabe der externen Funktion, die Fehlerzustände über entsprechende Protokollfunktionen zurückmelden kann.

Eine weitere Ausführungsvariante erweitert das Protokoll zur Kommunikation zwischen Objekt-Service und Clients um eine Funktion, über die ein Client jeweils ein Objekt-Element und die interessierenden Ereignisse (Inhalts-Änderung, Ungültigkeitserklärung) spezifiziert. Beim Eintritt eines entsprechenden Ereignisses erhält der interessierte Client eine Benachrichtigung. Er kann anschließend nach Bedarf über die bereits beschriebenen Mechanismen Inhalte abrufen (und dabei ggf. erforderliche Ausdrucks-Auswertungen veranlassen) und sie z.B. an Fremdsysteme übertragen.

## Patentansprüche

1. Verfahren zur maschinell ausführbaren Informationsverarbeitung, das Informationen in einer hierarchischen Struktur mit mindestens zwei Hierarchieebenen repräsentiert, wobei der Strukturaufbau durch Eingabemittel modellierbar ist und der Inhalt von Elementen jeweils wahlweise
a) durch Eingabemittel manipulierbar ist oder
b) durch maschinelle Auswertung eines durch Eingabemittel manipulierbaren Ausdrucks ermittelt wird.

2. Verfahren nach Patentanspruch 1, **dadurch gekennzeichnet,**
**dass** eine Menge vorgefertigter Teilstrukturen systemseitig bereitgestellt wird.

3. Verfahren nach einem der Patentansprüche 1 oder 2, **dadurch gekennzeichnet, dass** die Modellierung objektorientiert, insbesondere unter Einbeziehung von Klassen, erfolgt.

4. Verfahren nach einem der Patentansprüche 1 bis 3, **dadurch gekennzeichnet, dass** Parameter für Darstellungs- und Bearbeitungsmodi der Elemente durch Eingabemittel manipulierbar sind.

5. Verfahren nach Patentanspruch 4, **dadurch gekennzeichnet,**
**dass** je Element mehrere Parametersätze existieren können, von denen in Abhängigkeit vom Resultat manipulierbarer Ausdrücke jeweils einer wirksam wird.

6. Verfahren nach einem der Patentansprüche 1 bis 5, **dadurch gekennzeichnet, dass** sämtliche Informationen, einschließlich Metainformationen dauerhaft gespeichert werden, insbesondere in einer objektorientierten oder relationalen Datenbank.

7. Verfahren nach einem der Patentansprüche 1 bis 6, **dadurch gekennzeichnet, dass** die Ausdrucks-Auswertung optimiert erfolgt, indem
a) das Ergebnis eines Ausdrucks genau dann als ungültig **gekennzeichnet wird**, wenn der Ausdruck geändert wurde oder der Inhalt eines vom Ausdruck referenzierten Elements verändert oder ungültig wurde und
b) das Ergebnis eines Ausdrucks erst dann aktualisiert wird, wenn es zur Darstellung oder zur Ermittlung eines anderen Ergebnisses benötigt wird.

8. Verfahren nach einem der Patentansprüche 1 bis 7, **dadurch gekennzeichnet, dass** die Systemarchitektur eine Aufgabenverteilung zulässt mit der Möglichkeit getrennter Verarbeitung zur
a) Visualisierung und Bearbeitung von Informationen und Metainformationen,
b) Bereitstellung von Informationen und Metainformationen, insbesondere zum Zwecke der Visualisierung und Bearbeitung oder zur Ein- und Ausgabe an externe Systeme,
c) parallelen Auswertung von Ausdrücken mit Hilfe einer beliebigen Anzahl von Prozessoren.

9. Verfahren nach einem der Patentansprüche 1 bis 8, **dadurch gekennzeichnet, dass** die Ausdrucks-Auswertung um externe (benutzerdefinierte) Funktionen erweiterbar ist.

10. Verfahren nach einem der Patentansprüche 1 bis 9, **dadurch gekennzeichnet,**
**dass** ein externer Prozess auf Anforderung über die Änderung oder Ungültigkeit wählbarer Strukturbestandteile benachrichtigt wird.

11. Software-Produkt, das Bestandteile enthält, die in Verbindung mit Hardware ein Verfahren nach einem der Patentansprüche 1 bis 10 ausführen.

12. System, das so konfiguriert ist, dass es ein Verfahren nach einem der Patentansprüche 1 bis 11 ausführen kann.
